# EUROPEAN PATENT APPLICATION

(11) **EP 2 081 121 A1**
(43) Date of publication of application: **22.07.2009**
(21) Application number: 08250084.4
(22) Date of filing: 09.01.2008
(51) Int. Cl.: G06F 17/30

(54) **Data upload and retrieval**

(71) Applicant: British Telecommunications public limited company, 81 Newgate Street London EC1A 7AJ (GB)
(72) Inventor: The designation of the inventor has not yet been filed
(74) Representative: Williamson, Simeon Paul

(57) **Abstract**

A method of uploading a data file to a communications network comprising the steps of
- uploading the data file from a mobile device to a local base station,
- at the local base station, processing the data file to generate a reduced-sized version of the digital file, and
- transferring the reduced-sized version of the data file to a node on the communications network.

## Description

The present invention relates to the uploading, storage, and subsequent retrieval of digital data files in a communications network system. In particular but not exclusively, it relates to the transfer of large data files from mobile or portable media-capturing devices over communication network systems for storage, uploading, transmission and downloading.

Digital files now exist in proliferation for a wide variety of data. Media content files consisting of image (still and moving) and/or audio content in particular, take up considerable amounts of memory (compared e.g. to a text-only file). With improving recording/sampling technologies to obtain superior fidelity or quality, these already large files are ever-growing in size. By way of example, a still image captured directly by the charge-coupled device (CCD) of e.g. a 10 megapixel camera can occupy up to 10 MB (uncompressed RAW format). (Such media-capture devices need not even be a professional-grade device, and even mobile or cellular telephones now include cameras and sound recorders capable of generating large media files.) Even after compression of such files to more memory-friendly formats like the Joint Photographic Experts Group (JPEG) for storage on the storage or memory medium of the camera, an image file of an acceptable quality may still require more than 1 MB in memory space. Media content files containing video information of a certain length and quality, will typically require even more memory, as would audio files. Other types of data which may be contained in such files may include haptic information, and so on, which may require yet more memory.

As noted above, it is possible to compress the size of such files e.g. for purposes of storage, or transmission (which shall in this specification include the concepts of uploading and downloading them) within the communications network. As can be expected however, this comes at the cost reducing the amount of information within the file. Users may need the full, uncompressed, high-quality version of the media file especially for commercial purposes: newspaper photographers are an example of parties who may have such a need. Thus, that a small file which can be easily stored and which can be transmitted in an acceptable time, may nonetheless be of an unacceptable quality, especially if a lossy compression method is used.

One issue that results from this is that users have to choose a point of compromise between obtaining the best possible (or best desired) quality of the media file on the one hand, and on the other hand, managing potentially many large files that might not only rapidly overwhelm the media capture device's storage capabilities, but which also might prove to be unwieldy in their management, processing and transmission.

To cope with the need for storage in mobile devices such as cameras, digital audio recorders and the like, storage media cards and other mobile methods have been developed which have ever-larger capacities. These are of course expensive, and the capacity growth is struggling to keep pace with the demands for even greater memory arising from developments in media capturing.

Issues relating to low transmission rates are exacerbated over low-bandwidth communication links, and even more so in wireless systems where the links are vulnerable to premature termination. It may that due to such factors, the use of Multimedia Messaging Service (MMS) messages for sending such media files has been less of a commercial success than had been hoped. It is well known that such large files may be uploaded and transmitted at a relatively great cost (at least in terms of bandwidth consumption) when they are found, upon arrival, to be unwanted in any event, and then discarded at that point.

US 2002/0032027 describes a method whereby a digital image captured using a camera is subject to a two-stage process. In the first process, which is performed in the camera itself, the captured image is processed to produce a highly-compressed, reduced-quality image. In the second process, elements of the resulting image of varying degrees of significance are selected and transmitted to a server. The remaining elements of significance are left on the camera. The reduced-quality image sent to the server can subsequently be upgraded to a higher-quality version by synchronising the remaining elements of significance left on the camera. This method requires for much of the processing to be carried out by the mobile camera: adding to its onboard complexity, drawing on its limited power, and retaining photographic elements needed for a possible desired upgrade for an indefinite period.

US 2003/0182143 describes a method for uploading photographs from digital cameras at an amusement park. Photographs are uploaded at a physical photo kiosk at the amusement park where they are stored for a short-term period. Longer-term storage on a network store can be purchased. US 2003/0030839 also describes how a laptop local to the mobile media capture device in the form of a laptop, can be used to store media files in a way so that the stored files can be uploaded to a network server via an intranet or the Internet. Both disclosures do not however address the bandwidth issues created by the transmission of a large amount of traffic.

In general, the present invention provides methods and devices for aspects relating to the management of relatively large media files - in the main, still and moving images, and audio, addressing issues raised by the limitations in memory carried with mobile media-capture devices, and the storage, processing and transmission (including any uploading or downloading) via a communications network, whether over wired or wireless links.

A first aspect of the present invention provides a method of uploading a data file to a communications network comprising the steps of
- uploading the data file from a mobile device to a local base station,
- at the local base station, processing the data file to generate a reduced-sized version of the digital file, and
- transferring the reduced-sized version of the data file to a node on the communications network.

Embodiments of the invention enable a user, or a party authorised by the user, to have access or sight of the reduced-sized (with degraded quality) version of the image files, even though the user (or other party) is remote to the location of the base station or access point. This reduced-size or -quality file should preferably be of a size which includes a sufficient level of detail on e.g. a computer screen but which is small enough so that little excessive traffic is generated by the transfer of this (and any further such files) in their transmission from the access point to the user's store or personal computer.

In preferred embodiments, the original full, high-quality version of the data or image file is retained and stored at the access point. This is later transferred via the network to the user, being a store, a computer, or other destination via the network. This can be made conditional to the occurrence of an event or a positive act by the user or other party (e.g. payment for the full version transfer), by the passage of a pre-determined time period, the sensing that traffic levels within the network have dropped, or the like.

Preferably, the mobile device, such as a digital still or moving image camera, or an MP3 recorder, communicates with the base station over a Wi-Fi link.

According to a second aspect of the invention, there is provided apparatus for uploading a data file to a communications network comprising a base station for accessing the communications network, wherein the base station further comprising
- a receiver to receive the data file,
- generation means to generate a reduced-sized version of the data file,
- a transmitter to transfer the reduced-sized version of the data file to a node on the communications network, and
- a store for storing the data file.

By providing the capacity to reduce the size of the files at the access point, there is the possibility of generating a file of a size which can be transmitted in a manner which adds less to the traffic level than would have otherwise been the case if the full versions had been sent. At the same time, the full versions are advantageously maintained at the edge of the network in a manner where they can be subsequently accessed and sent for, but which until they are request for, do not use any network resources or bandwidth. The typically superior transmission speed of the Wi-Fi transmission link between the mobile or portable device and the access point (as compared to backhauling traffic over a copper ADSL line), a real advantage in uploading the large image files to the access point storage and no further into the network can be realised.

According to a third aspect of the invention, there is provided a system comprising apparatus of the invention wherein the node on the communications network is accessible to a user.

Preferred embodiments of the invention will now be described, by way of example only, with reference to the accompanying drawing, in which:
Figure 1 is a schematic view of a communication network in which a method of the invention operates;
Figure 2 depicts the process flows between components of the apparatus of the invention; and
Figure 3 depicts some components within a network gateway according to the invention.

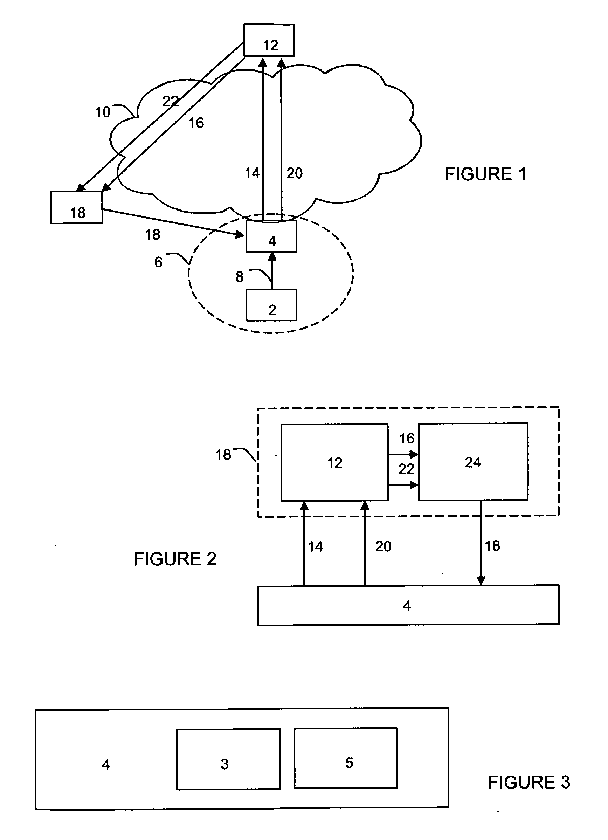

As shown in Figure 1, a portable media-capture device (2) is connectable and connected by a communications link (8) to a gateway (6) to a communications network (10). (In the following discussion, the mobile device is a digital camera referred to as an example, which takes digital still images or photographs.) A store (12) is located remotely to the local area, but to which a connection can be made via the network. A client computer (18) of the user is located again as a network node remotely from both the local area and the store, but which may communicate with both via the network, as indicated by process flow arrows 14, 16, 18, 20 and 22. These process flows are also shown in the embodiment depicted in Figure 2, wherein the store (12) is part of the client computer (18), of which the other component shown is the processor (24). These process flows will be described in detail below.

As shown in Figure 3, the gateway (4) is configured to include, or otherwise be associated with data storage capabilities (3), and means (5) to reduce the size of files transmitted via the gateway, such compression algorithm software (such as that for the JPEG, MP3, ZIP, etc. formats) programmed to run over the gateway hardware.

In a typical scenario, the user uses the camera to capture image data files. Ideally, the user has been able to record the image files at the highest quality desired, and to have stored them in the mobile or portable storage medium (2) associated with the camera. This may take the form of an onboard memory of a mobile telephone camera, a flash memory card, a hard disk storage device, a laptop, or the like). The image files can be transferred over a communications link (8) to the network (10) which can be any network including an intranet or the Internet, via a gateway device (4), router, base station or an access point, within a local area (6).

The local area (6) can comprise a wired or wireless environment, where transmissions over the communications link (8) use an IP protocol, GPRS, 3G or the like. In the present example, the link (8) comprises a wireless Wi-Fi link which in this description refers to the IEEE 802.11 wireless LAN communications standard. The camera or other device (2) is adapted to communicate using Wi-Fi, or whatever communication standard is adopted.

The number of Wi-Fi access points functioning as a local base station providing access to the network (in the form of an intranet, the Internet or the like) available to users who do not own or otherwise control them, are numerous and increasing in number worldwide. This is the case particularly with various parties making available access in the form of Wi-Fi "hotspots", which may be available for free or for a charge. Such access may also be provided by private parties who allow network access through their private wireless access point or hub.

The image files in the camera store (2) are in this illustration, therefore transmitted at Wi-Fi speeds to the access point (4), for storing thereat. At the end of the uploading process, the memory store associated with the camera or other device is, or can be "emptied out" so that it can be reused.

In the invention, the connection between the portable device and the base station is typically a temporary connection preferably allowing for a relatively high transmission rates to be achieved. Hence a Wi-Fi connection can be made, although the connection could be a Bluetooth or a wired connection. The base station connection is a more permanent link to the communications network, which typically comprises a link capable of lower transmission rates than the link between the portable device and the base station. Copper-based access network infrastructure is an example of such a link between the base station and the network.

Advantageously therefore, this upload of the image or other files to the access point within the local area can be made at a relatively high throughput speed (e.g. up to 54 MBit/s using IEEE 802.11g), which may be compared to the throughput speed achieved over the backhaul (which links access points or such other distributed sites with centralised points of presence in the network). This is true particularly where the backhauling is conducted over an ADSL copper connection, where the uploading transmission rates are often slower than for downloads (e.g. typically 0.5 to 1 MBit/s, as compared with 4 to 8 MBit/s).

The uploaded files are of the quality which the user desires, without having been compressed. Depending on user selection, this could be the full, "digital negative" RAW format, or else may be a slightly- (or more) compressed JPEG file.

According to the invention, the image files are then processed at the access point to obtain the "reduced quality" version of the image file, by which is meant that a compression or other technique (5) is applied so as to generate information which is indicative of the image files as originally uploaded. The reduced-quality version of the files can comprise "thumbnail" images or the like, which are reduced in memory size so that the amount of computer resources to store and transmit are reduced relative to the originally-transmitted "high quality" version. Preferably all the reduced-quality versions of the image files are then sent (arrow 14) to a processor or store (12) via the network, preferably as soon as they are created. This store is one to which the user (who took the photograph) has access, or otherwise has control over. The store can be part of the client computer (18) which the user has access to or control over (as shown in Figure 2), or else it can be a stand-alone store (as shown in Figure 1) which may be network-based storage owned and/or maintained by a third party on a commercial basis or otherwise.

The sending of the reduced quality version of the image file via the Internet using e.g. an IP protocol from the access point store (4) to the network or client store (12) thus generates less traffic than would have been the case if the original uploaded image had been transmitted. The user is able to view (arrow 16) the uploaded image files with little or no delay, even if they are reduced in quality relative to the originals he had taken.

As a next step, the user can choose to have some or all (or none) of the high-quality image files as originally uploaded, transmitted to him (arrow 20), by making a decision and selection(s) based on the lower-quality image files. To achieve this, the selected files are transmitted in their full, high-quality versions in a conventional way to the user's store (12) and/or computer (18). In a preferred alternative, the full versions of the files are transmitted at non-peak times of the day when the network traffic levels are low, for cost-efficiency. As the core sections of the network (or the Internet) are typically configured to run at higher speeds (ADSL or higher), the bottleneck suffered in a transmission direct from the camera to the users store (12) located typically at the point (arrow 8) between the camera and the access point is removed.

Advantageously, the method of the invention allows for the limited memory store associated with the camera (2) to be used again and again after each uploading to an access point, even if the user is remote from his store (12). The full files versions which would otherwise have been relatively expensive to send to the user's store (12) are not transmitted until a positive confirmation that they are wanted, is received. Nonetheless, these full file versions remain accessible and available on demand, without incurring the "up front" bandwidth and storage cost before the user has had the chance to consider if they are wanted, or if they should be discarded. This allows the user to increase the size of the image files to a point that might not have been considered, due to the limitations and memory and the sheer time and cost involved in having to upload and send a number of very large files over a possibly slow connection.

By way of example, one application for this aspect of the invention would the use by a traveller who wishes to store his photographs before arriving home, in a way which allows him, when he reaches home, the chance to cost-efficiently review and select only those which he decides eventually does decide to have in their full form. In the application, the transfer of the high-quality pictures may have to be paid for, as discussed elsewhere in this description. The initial view of the reduced-quality pictures may also be charged for, or may be provided for free.

In another example, a news journalist covering an event may very quickly and efficiently despatch reduced-versions of the images he has captured, to his editor for later selection of certain images which it is decided to use.

In variations of the above apparatus and processes of the invention, the high-quality version of the image file can be generated by sending only those parts missing from the lower-quality version already in the client or network store (12) by use of known progressive JPEG techniques. This improves the efficiency of the storage of the data making up the image file.

In yet another variation, a central server (not shown in the drawings) could be used for purposes of coordinating the entire process, from the initial upload of the high-quality files to the access point (4) to the final receipt of the selected high-quality files. The process flows (14, 16, 18, 20 and 22) could therefore be directed via such a central server.

Further variations are possible, and some may occur to the skilled person, such as configuring the method so that all the high-quality images uploaded to the access point are eventually sent to the user's store without need for a selection to be made. This aspect may be of particular application when it is sensed that there is insufficient capacity in the network to transmit the high-quality files at a particular time, but that there is enough bandwidth to support the sending of the lower-quality files. Additionally or alternatively, the user may prioritise the sending of the high-quality files in particular order of preference.

Methods to produce a lower-quality version of the data file other than the application of a compression algorithm may be used. For example, a summary of a moving image sequence or a video may be produced e.g. by obtaining spatial or temporal samples of the sequence.

By way of an example of a possible implementation of the method of the invention, the user could, as suggested in Figure 1, communicate directly with the access point to request the transmission of the high-quality files. Alternatively, a party having control of the central server could coordinate the activities between the user and the access point. In such a case, a commercial arrangement could implemented in which the reduced-quality files initially automatically uploaded to the user's store (12) is preformed for a nominal or no charge. A fee can be charged for subsequent transmission of the full versions of the files.

Full versions of the image or other data files which are not wanted can be eventually deleted or otherwise disposed of. The system may be set up so that they are automatically removed from the access point store after a pre-determined time (e.g. a week). Alternatively, they may remain in storage until the user positively instructs for their deletion.

It can be seen that no significant change needs to be made to the system to implement this invention. Significantly, the portable camera or other portable device need suffer no modification that may complicate its manufacture and use, so users need not buy new equipment, but may use that which they may already own. The need for compression means at the location of the access point as shown in Figure 3, is not a considerable change as the base station hardware would already have a processor which is capable of running a conventional compression algorithm. With access points serving as storage depots according to the invention, additional storage media may be needed on top of existing storage capacity. The cost of storage is relatively low (compared to other pieces of hardware) and is becoming lower.

The methods, devices, components and configurations described above and in the drawings are for ease of description only and not meant to restrict the invention to any particular embodiments. It will be apparent to the skilled person that various sequences and permutations on the methods and devices described are possible within the scope of this invention as disclosed.

## Claims

1. A method of uploading a data file to a communications network comprising the steps of
- uploading the data file from a mobile device to a local base station,
- at the local base station, processing the data file to generate a reduced-sized version of the digital file, and
- transferring the reduced-sized version of the data file to a node on the communications network.

2. A method according to claim 1 further including the step of storing the data file at the local base station, for subsequent transfer to the or any other node on the communications network.

3. A method according to claim 1 or claim 2 wherein the step of processing the data file comprises compressing the data file.

4. A method according to any preceding claim wherein the step of uploading the file to the local base station uses the IEEE 802.11 wireless LAN communications standard.

5. A method according to any one of claims 2 to 4 wherein the step of subsequently transferring the data file is performed after a request by a user for the data file transfer.

6. A method according to any one of claims 2 to 5 wherein the step of subsequently transferring the data file is performed when the traffic levels within the communications network are low.

7. A method according to any preceding claim wherein the node on the communications network is accessible to the user.

8. Apparatus for uploading a data file to a communications network comprising a base station for accessing the communications network, wherein the base station further comprising
- a receiver to receive the data file,
- generation means to generate a reduced-sized version of the data file,
- a transmitter to transfer the reduced-sized version of the data file to a node on the communications network, and
- a store for storing the data file.

9. Apparatus according to claim 8 wherein the transmitter is further arranged to transfer the data file to the or any other node on the communications network.

10. Apparatus according to claim 8 or claim 9 wherein the receiver is arranged to receive the data file using the IEEE 802.11 wireless LAN communications standard.

11. Apparatus according to any one of claims 8 to 10 wherein the transmitter is arranged to transfer the data file when the traffic levels within the communications network are low.

12. A system comprising apparatus according to any one of claims 8 to 11 wherein the node on the communications network is accessible to a user.
